# EUROPÄISCHE PATENTSCHRIFT

(11) **EP 0 385 139 B1**
(45) Veröffentlichungstag und Bekanntmachung des Hinweises auf die Patenterteilung: **24.03.1993**
(21) Anmeldenummer: 90102304.4
(22) Anmeldetag: 06.02.1990
(51) Int. Cl.: F16J 15/34

(54) **Bauelementensatz für auf unterschiedliche Nennweiten eingerichtete Doppelgleitring-Dichtungsanordnungen**
Construction element of different nominal sizes for the arrangement of double stage mechanical seals
Elément constructif de dimensions nominales différentes pour l'aménagement de joints mécaniques à double étage

(30) Priorität: 01.03.1989 DE 3906426
(43) Veröffentlichungstag der Anmeldung: 05.09.1990
(73) Patentinhaber: Pacific Wietz GmbH + Co. KG, 44388 Dortmund (DE)
(72) Erfinder: Maser, Gustav, D-4600 Dortmund 50 (DE); Victor, Karl-Heinz, D-4620 Castrop-Rauxel (DE)
(74) Vertreter: Andrejewski, Walter

(56) Entgegenhaltungen:
- EP-A- 0 177 161
- DIN 24960

## Beschreibung

Die Erfindung betrifft eine Doppelgleitring-Dichtung mit einer vorgegebenen Nennweite N₀ für eine dieser Nennweite entsprechende rotierende Welle (W₀), welche Doppelgleitring-Dichtung einem System von weiteren Doppelgleitring-Dichtungen angehört, deren eine für Nennweite N₁ größer N₀ und deren andere für eine Nennweite N₂ kleiner N₀ eingerichter ist. - Es versteht sich, daß die Nennweiten durch unterschiedliche Wellendurchmesser definiert sind und daß die unterschiedlichen Durchmesser der Ringpaare zu den einzelnen Nennweiten durch Buchsen an die Wellen einheitlichen Durchmessers adaptiert sind.

Bei der bakannten Doppelgleitring-Dichtung, von dem die Erfindung ausgeht (vgl, DIN 24960), sind für die unterschiedlichen Nennweiten auch jeweils zwei von Nennweite zu Nennweite unterschiedliche Ringpaare erforderlich. Sind die Doppelgleitring-Dichtungen z. B. auf n Nennweiten ausgelegt, so sind bei dieser Organisation 2n unterschiedliche Ringpaare erforderlich, die von Nennweite zu Nennweite nicht austauschbar sind. Die bekannten Maßnahmen sind wegen der Vielzahl der erforderlichen Ringpaare in fertigungstechnischer Hinsicht aufwendig und verlangen eine aufwendige Lagerhaltung.

Der Erfindung liegt die Aufgabe zugrunde, bei der eingangs beschriebenen Organisation und Zweckbestimmung die Anzahl der erforderlichen Ringpaare zu reduzieren.

Die Lösung dieser Aufgabe ergibt sich aus dem Patentanspruch.

Im folgenden wird die Erfindung anhand einer lediglich ein Ausführungsbeispiel darstellenden Zeichnung ausführlicher erläutert. Es zeigen

Fig. 1 ein Schema eines erfindungsgemäßen Bauelementensatzes für vier unterschiedliche Nennweiten, und

Fig. 2 die konstruktive Gestaltung einer Doppelgleitring-Dichtungsanordnung aus dem Gegenstand nach Fig. 1.

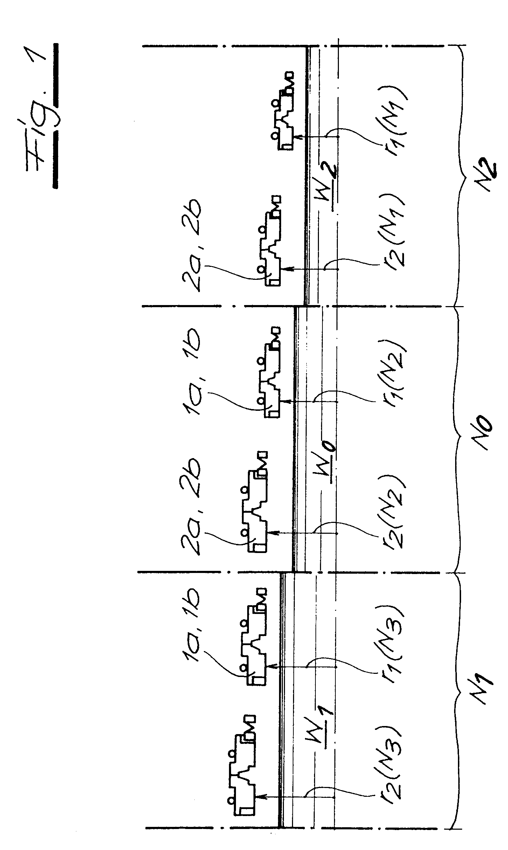

In der schematischen Darstellung der Fig. 1 erkennt man eine Welle W₀, W₁ bzw. W₂ von der die obere Hälfte angedeutet wurde, und oberhalb der Welle W₀, W₁ bzw. W₂ im Axialschnitt vier Doppelgleitring-Dichtungsanordnungen mit jeweils zwei Ringpaaren 1a, 1b und 2a, 2b. Die untere Hälfte der Fig. 1 ist symmetrisch zu ergänzen. Es ist angedeutet, daß es sich um ein System für auf drei unterschiedliche Nennweiten N₀, N₁ und N₂ eingerichtete Doppelgleitring-Dichtungsanordnungen für rotierende Wellen handelt.

Vergleicht man die in Fig. 1 nebeneinanderstehenden Figuren, so erkennt man, daß die Ringpaare 2a, 2b mit dem größeren Ringdurchmesser r₂ der Doppelgleitring-Dichtungsanordnungen der Nennweiten N₀, N₂ zugleich als Ringpaar 1a, 1b der Doppelgleitring-Dichtungsanordnung der nächstgrößeren Nennweite N₁ bzw. N₀ eingesetzt sind. Man erkennt, daß bei dem dargestellten System für auf drei unterschiedliche Nennweiten N₀, N₁, N₂ eingerichtete Doppelgleitring-Dichtungsanordnungen für rotierende Wellen W₀, W₁, W₂ lediglich vier unterschiedliche Ringpaare 1a, 1b bzw. 2a, 2b erforderlich sind.

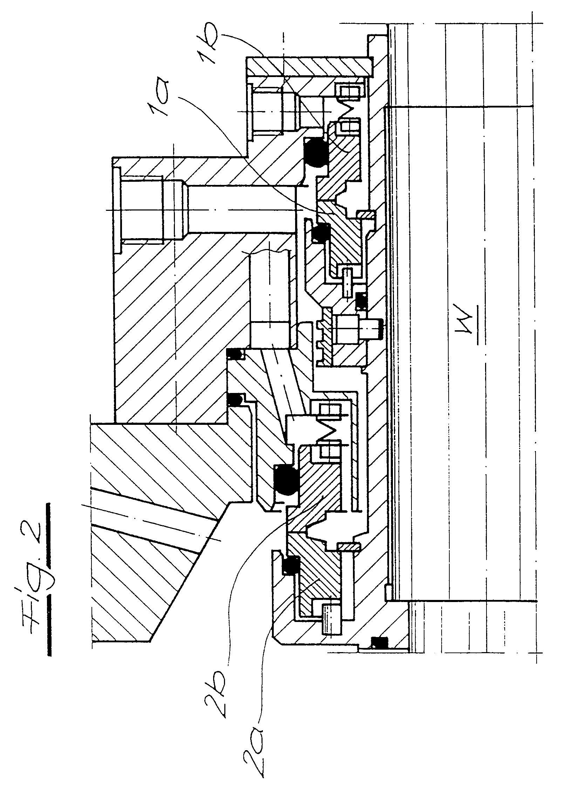

Mit den obigen Erläuterungen ist die Fig. 2 ohne weiteres verständlich. Sie zeigt in vergrößertern Maßstab sowie im eingebauten Zustand eine erfindungsgemäße Doppelgleitring-Dichtungsanordnung vorgegebener Nennweite.

## Patentansprüche

1. Doppelgleitring-Dichtung mit einer vorgegebenen Nennweite N₀ für eine dieser Nennweite entsprechende rotierende Welle (W₀), welche Doppelgleitring-Dichtung einem System von weiteren Doppelgleitring-Dichtungen angehört, deren eine Gleitringdichtung zusätzlich für eine Nennweite N₁ größer N₀ und deren andere Gleitringdichtung zusätzlich für eine Nennweite N₂ kleiner N₀ eingerichtet ist, -
mit zwei Gleitringpaaren (1a, 1b; 2a, 2b) aus jeweils einem mit der Welle rotierenden Gleitring (1a, 2a), der über eine Gleitringaufnahmeeinrichtung mit der Welle (W₀) verbunden ist, und mit einem gehäusefesten Gleitring (1b, 2b),
wobei das eine Gleitringpaar (1a, 1b) einen ersten Ringdurchmesser r₁ und das andere
Gleitringpaar (2a, 2b) einen zweiten Ringdurchmesser r₂ größer r₁ aufweist, und
wobei das Gleitringpaar (1a, 1b) mit dem kleineren Ringdurchmesser r₁ in der zum System gehörenden Doppelgleitring-Dichtung für die Nennweite N₂ kleiner N₀ als Gleitringpaar mit dem großen Ringdurchmesser r₂ von der der Nennweite N₂ zugeordneten Welle (W₂) einsetzbar ist, sowie das Gleitringpaar (2a, 2b) mit dem größeren Ringdurchmesser r₂ in der zum System gehörenden Doppelgleitring-Dichtung für die Nennweite N₁ größer N₀ als Gleitringpaar mit dem kleineren Ringdurchmesser r₁ von der der Nennweite N₁ zugeordneten Welle (W₁) einsetzbar ist.

## Claims

1. A double rotating mechanical seal with a predetermined nominal diameter N₀ for a rotating shaft (W₀) corresponding to this nominal diameter, which double rotating mechanical seal forms part of a system of further double rotating mechanical seals, one rotating mechanical seal of which is set in addition for a nominal diameter N₁ larger than N₀ and the other rotating mechanical seal of which is set in addition for a nominal diameter N₂ smaller than N₀, -
with two sliding ring pairs (1a, 1b; 2a, 2b) each comprising a sliding ring (1a, 2a) rotating with the shaft, which is attached to the shaft (W₀) by means of a sliding ring location device, and with a sliding ring (1b, 2b) fixed to the housing,
wherein one sliding ring pair (1a, 1b) has a first ring diameter r₁ and the other sliding ring pair (2a, 2b) has a second ring diameter r₂ which is larger than r₁, and
wherein the sliding ring pair (1a, 1b) with the smaller ring diameter r₁ can be used as the sliding ring pair with the large ring diameter r₂ of the shaft (W₂) associated with the nominal diameter N₂ in the double rotating mechanical seal for the nominal diameter N₂ smaller than N₀ forming part of the system, and the sliding ring pair (2a, 2b) with the larger ring diameter r₂ can be used as the sliding ring pair with the smaller ring diameter r₁ of the shaft (W₁) associated with the nominal diameter N₁ in the double rotating mechanical seal for the nominal diameter N₁ larger than N₀ forming part of the system.

## Revendications

1. Dispositif d'étanchéité à deux bagues coulissantes, qui possède une portée nominale prédéterminée N₀ pour un arbre rotatif (W₀), qui correspond à cette portée nominale, lequel dispositif d'étanchéité à deux bagues coulissantes fait partie d'un système d'autres dispositifs d'étanchéité à deux bagues coulissantes, dont l'un est en outre conçu pour une portée nominale N₁ supérieure à N₀ et dont l'autre est en outre conçu pour une portée nominale N₂ inférieure à N₁, comportant
deux couples de bagues coulissantes (1a,1b; 2a,2b) constitués chacun par une bague coulissante (1a,2a), qui tourne avec l'arbre et est raccordée à l'arbre (W₀) par l'intermédiaire d'un dispositif de logement de bague coulissante, et par une bague coulissante (1b,2b) fixée à un boîtier,
et dans lequel un couple de bagues coulissantes (1a,1b) possède un premier diamètre r₁ et l'autre couple de bagues coulissantes (2a,2b) possède un second diamètre r₂ supérieur à r₁, et
dans lequel le couple de bagues coulissantes (1a,1b) possédant le diamètre le plus petit r₁ peut être inséré dans le dispositif d'étanchéité à deux bagues coulissantes, qui fait partie du système et est congru pour la portée nominale N₂ inférieure à N₀ en tant que couple de bagues coulissantes possédant le grand diamètre r₂ de l'arbre (W₂) associé à la portée nominale N₂, et le couple de bagues coulissantes (2a,2b) possédant le diamètre supérieur r₂ peut être inséré dans le dispositif à deux bagues coulissantes, qui fait partie du système et est congru pour la portée nominale N₁ supérieure à N₀ en tant que couple de bagues coulissantes possédant le diamètre le plus petit r₁ de l'arbre (W₁) associé à la portée nominale N₁.
